# EUROPEAN PATENT SPECIFICATION

(11) **EP 2 813 058 B1**
(45) Date of publication and mention of the grant of the patent: **20.04.2016**
(21) Application number: 13708557.7
(22) Date of filing: 15.02.2013
(51) Int. Cl.: H04L 29/08, H04L 29/12

(54) **A METHOD FOR SCALABLE ROUTING IN CONTENT-ORIENTED NETWORKS**
VERFAHREN FÜR SKALIERBARES ROUTING IN INHALTSORIENTIERTEN NETZWERKEN
PROCÉDÉ D'ACHEMINEMENT ÉVOLUTIF DANS DES RÉSEAUX ORIENTÉS CONTENU

(30) Priority: 16.02.2012 US 201261599702 P
(43) Date of publication of application: 17.12.2014
(73) Proprietor: Huawei Technologies Co., Ltd., Longgang District Shenzhen, Guangdong 518129 (CN)
(72) Inventor: XIE, Haiyong, Union City, California 94587 (US); WANG, Guoqiang, Santa Clara, California 95051 (US); SHI, Guangyu, Cupertino, California 95014 (US)
(74) Representative: Körber, Martin Hans
(86) International application number: PCT/US2013/026456
(87) International publication number: WO 2013/123410

(56) References cited:
- ZHANG L ET AL: "Named Data Networking (NDN) Project", INTERNET CITATION, 31 October 2010 (2010-10-31), pages I-II, XP002687393, Retrieved from the Internet: URL:http://www.named-data.net/techreport/T R001ndn-proj.pdf [retrieved on 2012-10-01]
- VAN JACOBSON ET AL: "Networking Named Content", CONEXT '09 PROCEEDINGS OF THE 5TH INTERNATIONAL CONFERENCE ON EMERGING NETWORKING EXPERIMENTS AND TECHNOLOGIES; DECEMBER 1 - 4, 2009; ROME, ITALY, ASSOCIATION FOR COMPUTING MACHINERY, NEW YORK, NY, USA, 1 December 2009 (2009-12-01), pages 1-12, XP002608160, DOI: 10.1145/1658939.1658941 ISBN: 978-1-60558-636-6 [retrieved on 2010-11-02]

## Description

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Name-based routing is a present paradigm for network routing. Name-based routing has served the traditional *"host-to-host"* communication model for many years. Name-oriented networking efforts include Content-Centric Network (CCN) and Named data Networking (NDN). However, a paradigm shift from a *"host-to-host"* model to a "*host*-*to*-*content*" or *"host-to-information"* model appears imminent. The CCN and NDN have attempted to adopt name-based routing to enable the *"host-to-content"* communication model, specifically, by utilizing content objects with structured names. In name-based routing, e.g., CCN and NDN, a content origin or source that owns original content objects may announce name prefixes into the network. Such announcements may be propagated throughout the network via intra-domain routing protocols, such as Open Shortest Path First (OSPF). A Forward Information Base (FIB) in each router may store to which interface ("face") the router may forward any request for a named content matching a given name prefix. Upon receiving name prefix announcements, each router may update the corresponding FIB accordingly. Clients may send interest packets requesting for interested content, and the network may respond with data packets of the requested content. The CCN and NDN may also use other components, such as a Content Store (CS) and a Pending interest Table (PIT). The CS may be used to store cacheable content objects for efficient content distribution, and the PIT may be used to aggregate pending interests for the same content and propagate data packets, e.g., in a multicast manner, towards the requesting clients.

However, name-based routing in CCNs (and NDNs) may also pose challenges to network scalability. In current CCN design, content origins (or their first-hop routers) may have to be propagated throughout the network via either intra-domain protocols, such as OSPF, or similar protocols, e.g., similar to how Internet Protocol (IP) prefixes are announced in an intra-domain network. This scheme is referred to herein as the proactive routing scheme. However, the number of distinct name prefixes of future systems is expected to be large, even after aggressive aggregation. Propagating large numbers of name prefixes may be challenging since this may overload routers and consume a substantial portion of network bandwidth. Additionally, the number of name prefixes may be multiple orders of magnitude larger than what the conventional FIB may store, thus the FIB may only store a subset or a portion of name prefixes. As a result, the FIB may miss when the FIB has no knowledge about where to forward interests. Such misses may be common and name-based routing may heavily rely on fallback schemes, e.g., broadcast interests, to address FIB misses, degrading network performance and user experiences. Further, the fallback scheme adopted in CCN may become another cause for overloading routers, consuming a significant portion of network bandwidth, and degrading network performance. Reusing intra-domain routing protocols (e.g., OSPF with CCN adaptation) has been proposed to propagate name prefixes to all routers in an intra-domain network. However, the number of name prefixes is likely to increase at least at the scale of domain names in the Internet. Re-using OSPF-like protocols may lead to further network scalability challenges. For instance, in the case of domain names with an average length of about 16 bytes, announcements of about 0.5 billion domain names may generate 8×10⁹ bytes of traffic. If those names are announced in about 1-minute intervals, then for each network link, the average bandwidth consumed by periodical active announcements may be about 1 Giga bits per second (Gbps). Moreover, the number of name prefixes may be larger than the number of domain names, e.g., 10 times larger, yielding a bandwidth consumption due to name prefix announcement as high as about 10 Gbps.

Zhang L et al: "Named Data Networking (NDN) Project", INTERNET CITATION, 31 October 2010 (2010-10-31), pages I-II, XP002687393 discloses aNDN architecture.

Document VAN JACOBSON et al: "Networking Named Content", CONEXT 09 PROCEEDINGS OF THE 5TH INTERNATIONAL CONFERENCE ON EMERGING NETWORKING EXPERIMENTS AND TECHNOLOGIES; DECEMBER 1-4, 2009; ROME, ITALY, ASSOCIATION FOR COMPUTING MACHINERY, NEW YORK, NY, USA. 1 December 2009 (2009-12-1), pages 1-12 XP002608160 presents Content-Centric Networking (CCN) which treats content as a primitive-decoupling location from identity, security and access, and retrieving content by name.

### SUMMARY

In one aspect, the disclosure includes a method for routing content, wherein the method is performed by a content router in a name-based network, the content router comprising a modified Forwarding Information Base FIB which stores a name prefix and a name of a router for the name prefix and a Reachability Information Base RIB which stores a forwarding face that the content router uses to reach a router in the name-based network, comprising receiving an interest packet from a first face, wherein the interest packet comprises a content name field populated with a first content name, a destination field, and a broadcast flag field set to broadcast, wherein the broadcast field indicates whether the first face has previously received a request having the first content name, and receiving a data packet from a second face, wherein the data packet comprises a content name field populated with a second content name, a source field populated with the identity of a source of data associated with the second content name, and a data field populated with the data associated with the second content name.

In another aspect, the disclosure includes an apparatus in a name-based network, comprising a processor configured to receive an interest packet from a first forwarding face, wherein the interest packet comprises a content name field populated with a content name, a destination field, and a broadcast flag field set to broadcast, wherein the broadcast field indicates whether the first face has previously received a request having the first content name; add the content name and the identity of the first face to a PIT, obtain a destination associated with the content name from a FIB which stores a name prefix and a name of a router for the name prefix, retrieve the identity of a second face associated with a transmission path to the destination from the Reachability Information Base, RIB which stores a forwarding face that the content router uses to reach a router in the name-based network, and forward the interest packet to the second face.

In yet another aspect, the disclosure includes a computer program product, which is performed by a content router in a name-based network, comprising computer executable instructions stored on a non-transitory medium that when executed by a processor cause the processor to perform the following receive an interest packet from a requesting face, wherein the interest packet comprises a content name field populated with a content name, a destination field, and a broadcast flag field set to broadcast, wherein the broadcast field indicates whether the first face has previously received a request having the first content name; check a CS for an entry associated with the content name, when the CS entry exists, send data from the entry to the requesting face, when the CS entry does not exist, check a PIT for an existing entry associated with the interest packet, when the PIT entry exists, drop the interest packet, when the PIT entry does not exist, create a PIT entry with the content name and the identity of the first face, check a FIB which stores a name prefix and a name of a router for the name prefix for a FIB entry associated with the content name, wherein the FIB entry comprises a destination, when the FIB entry exists, retrieve the destination from the FIB, retrieve the identity of a second face associated with a transmission path to the destination from a RIB which stores a forwarding face that the content router uses to reach a router in the name-based network, and forward the interest packet to the second face; and, when the FIB entry does not exist, forward the interest packet to a plurality of neighboring faces.

### BRIEF DESCRIPTION OF DRAWINGS

For a more complete understanding of this disclosure, reference is now made to the following brief description, taken in connection with the accompanying drawings and detailed description, wherein like reference numerals represent like parts.
FIG. 1 depicts an interest starvation problem scenario in a CCN/NDN.
FIG. 2 is an embodiment of a content router for executing an embodiment of a method for scalable routing in content-oriented networks.
FIG. 3 shows embodiments of an interest packet and a data packet as may be used to enable reactive routing.
FIG. 4 shows a flowchart for an embodiment of a content router receiving an interest from a face.
FIG. 5 shows a flowchart for an embodiment of a content router receiving data coming back. FIG. 6 shows the summarized results of average E2E delay for one embodiment of the reactive routing scheme.
FIG. 7 shows summarized graphic results of CS hit ratios for one embodiment of the reactive routing scheme.
FIG. 8 shows summarized graphic results of FIB hit ratios for one embodiment of the reactive routing scheme.
FIG. 9 shows a plot for the number of broadcast packets when varying the CS size for one embodiment of the reactive routing scheme.
FIG. 10 shows a plot for the results when varying the FIB size for one embodiment of the reactive routing scheme.
FIG. 11 shows the joint impacts on reduction of broadcast overhead for one embodiment of the reactive routing scheme.
FIG. 12 is a general purpose network apparatus.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Disclosed herein are systems, methods, and apparatuses for enabling reactive name-based routing to address the network scalability challenges in name-based networks, e.g., in CCN and NDN. The disclosure includes adding a RIB to the system architecture and changing the semantics of the FIB. The disclosure further includes changing Interest Packet and Data Packet packet headers to support the RIB/FIB changes.

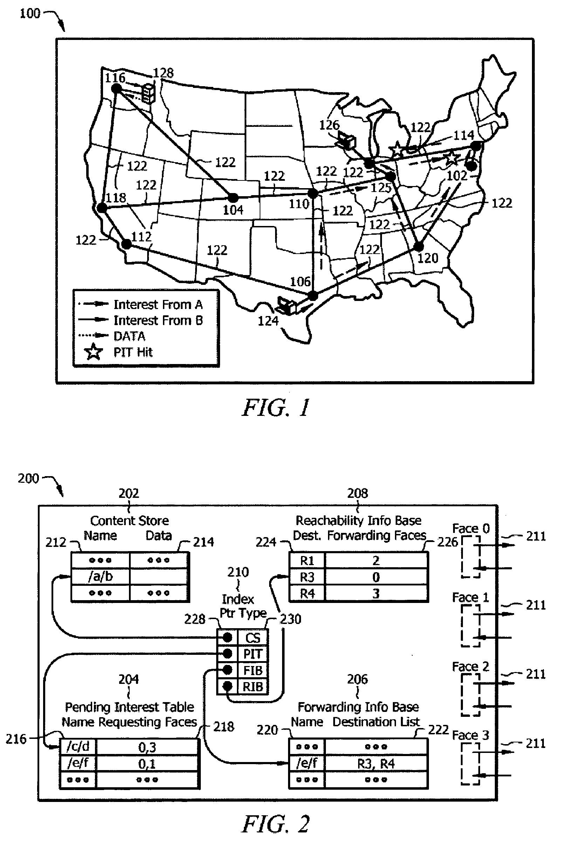

Conventional content routers may comprise an index, a CS, a PIT, and a FIB, wherein the FIB stores the name prefix and forwarding information for desired content. Unlike conventional content routers, embodiments of the disclosed content router, e.g., the content router 200 of FIG. 2, may comprise a RIB for leveraging the benefits of host-oriented routing. Specifically, the RIB may store the forwarding face(s) that the content router may use to reach any router in the network. In typical intra-domain networks, the number of routers ranges may be less than a couple of thousand. Since the routers announce their names using intra-domain routing protocols described herein, each content router may be able to build a local RIB individually. Multi-path routing may be feasible if multiple forwarding faces are allowed in any RIB entry; however, routing loop prevention schemes may alternatively be adopted. If only a single forwarding face is allowed in any RIB entry, then the routing may be single-path routing and the benefits of potentially multi-path routing in CCN may be lost. However, there may be a gain of simplified routing and improved scalability. Additionally, disclosed embodiments may include a modified FIB, wherein each FIB entry may store a name prefix and the names of "landmark" routers for this prefix. Data packets configured with the disclosed header information may bear the origin's name (or an intermediate router's name). Consequently, upon receipt of such a data packet, a content router may update its FIB accordingly. The CS and PIT may be configured as in typical CCNs/NDNs.

The disclosure includes utilizing these and other changes to yield a reactive routing scheme, e.g., a scheme wherein the system uses reactive announcements to announce name prefixes only when interests for the prefixes are injected into the network. Active announcements may consume a significant portion of network bandwidth and may overload routers and, consequently, announcing name prefixes for less frequent, rarely, or never accessed contents may waste network bandwidth. A reactive routing scheme may take content popularity into account and may provide announcements when there is an interest. Accounting for popularity may further permit the scheme to behave like a cache for routing entries, e.g., by dynamically evicting cold entries to make space for popular ones.

FIG. 1 illustrates an interest starvation problem scenario in a CCN/NDN 100. In the CCN/NDN 100, ten network nodes 102-120, e.g., routers, servers, switches, etc., are shown connected to each other by connections 122 in the manner depicted. FIG. 1 further shows a first client 124 connected to the CCN/NDN at node 106, a second client 126 connected at 102, and a content origin 128 connected at node 116. As depicted, the first client 124 may send an interest, e.g., an interest packet, for a content owned by the content origin 128, e.g., a router, a server, etc., to node 106. Node 106 may broadcast the interest to its neighbors, nodes 110, 112, and 120. The interest packets broadcast transmissions which reach the content origin 128 are not shown for brevity as they may reach their destination and, consequently, may not illustrate the interest starvation problem.

Turning to the starvation problem scenario, some interest packets may not reach the content origin before "starvation". Starvation refers to a condition in the CCN/NDN wherein an interest may be terminally "pending" in the PIT. When receiving an interest requesting for the same content as a pending interest in the PIT, a content router may attempt to avoid duplicate interest transmission by tracking which face(s) transmitted the interest and not forwarding the newly received interest. A starvation problem may arise where the interest packet has been previously forwarded to network nodes but the interest's corresponding data, e.g., a data packet, has (a) not yet been received at the interested node, and (b) has not yet been timed out in the PIT at the relevant network node. For example, interest packets transmitted by the first client 124 may reach remote nodes 102 and 114 separately. Node 102 may receive a forwarded interest via nodes 106, 110, and 108. Node 114 may receive an interest packet via nodes 106, 120, and 102. Upon separately receiving and processing the interest packets, nodes 102 and 114 will each have pending interests indexed in their PITs. Subsequently forwarded interest packets, e.g., interest packets forwarded from node 102 to node 114 and interest packets forwarded from node 114 to node 102, will lead to a PIT hits at nodes 114 and 102, respectively. Due to the way pending interests are processed, upon a PIT hit, no further forwarding, e.g., counterclockwise interest packet forwarding to nodes 108 or 110, may occur. When a subsequent data packet is received at node 110 fulfilling the interest, node 110 will not forward the data packet to node 108 because no interest packets from 108 may have been received. Since node 110 does not forward the data packet to node 108, nodes 108, 114, 102, and 120 may have PIT entries and may not receive the data. This condition is referred to herein as an interest starvation scenario.

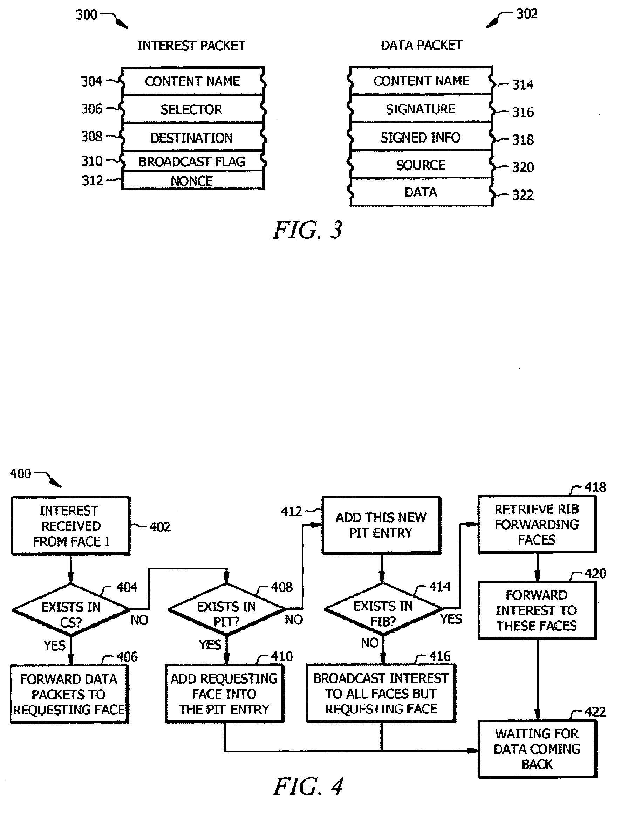

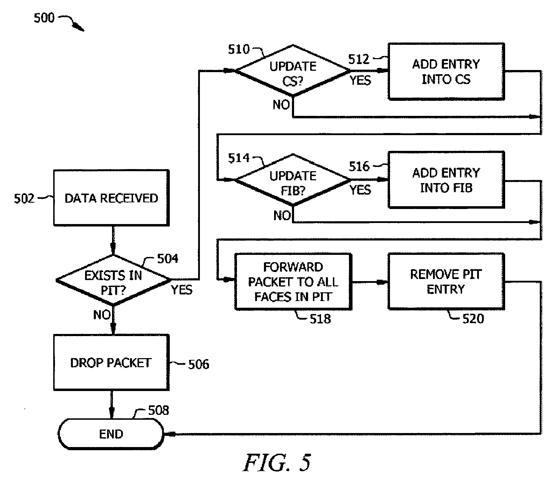

FIG. 2 illustrates an embodiment of a content router 200, e.g., a network node 102-120 of FIG. 1, which may be designed to execute an embodiment of a method for scalable routing in content-oriented networks. The content router 200 may comprise a CS 202, a PIT 204, a FIB 206, a RIB 208, an index table 210 that points to the CS 202, PIT 204, FIB 206, and RIB 208, and a plurality of faces 211. The CS 202 may comprise a name element 212 for storing the name of the content and a data element 214 for storing the data content. The PIT 204 may comprise a name element 216 for storing the name of the content and a requesting faces element 218 for storing the identity of the face(s) 211 which forwarded an interest packet to the content router 200. The PIT 204 may keep track of interest packets that have been forwarded upstream toward content source(s) so that returned data packets may be sent downstream to the requestor(s). PIT 204 entries may be erased as soon as they have been used to forward a matching data packet. PIT 204 entries for interests that never find a matching data packet may timeout at predetermined periods. The FIB 206 may comprise a name element 220 for storing a name prefix and a destination list element 222 for storing the destination identity of "landmark" routers for the associated name prefix. The RIB 208 may comprise a destination element 224 and a forwarding faces element 226 for storing the face(s) 211 through which a desired content hosting destination may be reached. The index 210 may comprise a type element 230 and a pointer element 228 for indexing the CS 202, the PIT 204, the FIB 206, and the RIB 208. The interaction of these components during an incoming interest handling process is described further under FIGS. 4 and 5.

FIG. 3 shows an embodiment of an interest packet 300 and a data packet 302 as may be used to enable reactive routing. Adding the RIB and modifying the semantics of the FIB in the content router, e.g., the content router 200 of FIG. 2, may require adding fields to conventional interest packets and data packets. Conventional interest packets may not contain fields for a broadcast flag or a destination. The interest packet 300 may contain fields for a content name field 304, a selector field 306, a destination field 308, a broadcast flag bit 310, and a nonce 312. The content name field 304 may store the name of the content identified by the interest packet 300. The selector field 306 may define what kind of action a selection process performs on a single packet of its input. The destination field 308 may contain the identity of the destination, if known. Setting the broadcast flag bit 310 to '1' may indicate a broadcast interest (B interest), and setting the broadcast flag bit 310 to '0' may indicate a non-broadcast interest (NB interest). A NB interest value may be set following a FIB hit at a router. If known, the router, e.g., content router 200 of FIG. 2, may fill in the destination field 308 in the NB interest with the name of a router which is associated with a transmission path towards the destination or origin, i.e., a "landmark" route, e.g., the router closest to the origin. In a B interest, the destination field 308 may be left empty, e.g., by populating the destination field 308 with a null value. As known in the art, the nonce 312 may comprise a random or pseudo-random number issued in an authentication protocol to ensure that old communications cannot be reused in replay attacks.

Conventional data packets may not contain a field for identifying a data source. The data packet 302 may contain a content name field 314, a signature field 316, a signed information field 318, a source field 320, and a data field 322. The source field 320 may contain the content origin's identification, which may provide a reference for updating the FIB. In some embodiments, the origin may obfuscate its own name, e.g., by hashing its name, for privacy preservation purposes. Further, in some embodiments there may be multiple origins for a given content and intermediate routers may override the source field 320 with its own name.

As described in FIG. 1, an unsatisfied PIT hit may cause starvation of future interests. This problem may be addresses with the broadcast flag bit 310. One property of the starvation is the underlying ring topology wherein some routers on the ring, e.g., node 108 of FIG. 1, prohibit forwarding further interests per their PIT policy. This starvation may be prevented by allowing routers, e.g., node 108, to further forward the B interest under certain terms. In FIG. 1, this may correspond to the B interest forwarding from 108 to 110 as well as from 114 to 102, i.e., traversing the ring topology in both clockwise and counter-clockwise directions. Consequently, once any router in the ring receives the data packet, all other routers may eventually clear the corresponding PIT entry. Thus, when the content router receives a B interest from a face which does not exist in the instant router's PIT (even where the corresponding content is pending), the interest may still be further broadcast.

For any B interest, it is eventually replied with the desired content if found in CS. If the incoming faces have no previous requests for the same content, and if the FIB, e.g., FIB 206 of FIG. 2, has no destination information for the requested content, it may be broadcast further. However, if the FIB does have the destination information, then the interest may be forward as a NB interest, e.g., by changing the broadcast flag bit 310 and filling in the destination field, to faces, e.g., faces 211 of FIG. 2, towards the destination. For any NB interest, since the destination is already filled, the interest may be directly forwarded according to the RIB, e.g., RIB 206 of FIG. 2, in a unicast manner. Alternate embodiments may resort to a broadcast approach, e.g., akin to the original CCN/NDN design, to forward the interest, e.g., converting an NB interest into a B interest before broadcast. However, in such embodiments, intermediate routers may still be required to directly reply with the content data in case of a CS hit.

FIG. 4 shows a flowchart 400 for an embodiment of a content router, e.g., the content router 200 of FIG. 2, receiving an interest from a face. The CS, PIT, FIB, RIB, index, and faces of FIG. 4 may be substantially the same as the CS 202, PIT 204, FIB 206, RIB 208, index 210, and faces 210 of FIG. 2. At block 402, the content router may receive an interest, e.g., an interest packet 300 of FIG. 3, from a requesting face, e.g., face 211 of FIG. 2. At block 404, the CS is checked for the content name, e.g., at the name element 212 of FIG. 2, to determine whether the content name exists in the CS. If so, the content router may retrieve the data, e.g., from data element 214 of FIG. 2, and may forward the data packets to the requesting face at 406. If a negative result is returned at block 404, at block 408 the PIT is checked to see whether an entry exists in the PIT associated with the content name, e.g., in the name element 212 of FIG. 2. If an entry exists, at block 410 the PIT may add the requesting face to the list of requesting faces associated with that content name, e.g., in requesting face element 218. Following this, at block 422 the content router may wait for data coming back, e.g., via data packets 302 of FIG. 3. If the entry does not exist, process 400 adds a new PIT entry with the content name and the requesting face identity at block 412. At block 414, process 400 checks whether the content name exists in the FIB, e.g., in the name element 220 of FIG. 2. If no entry exists for the content name, the content router may convert the NB interest into a B interest and broadcast the interest to all neighboring faces except for the requesting face at block 416 and may await data coming back at 422. If an entry does exist in the FIB, at 418 the content router may obtain the destination from the FIB destination list, e.g., destination list element 222 of FIG. 2, and may retrieve the RIB forwarding face, e.g., as stored in forwarding faces element 226 of FIG. 2. At block 420, process 400 may convert the B interest into an NB interest and forward the interest to the faces listed in the RIB and, at block 422, may wait for data coming back. As previously stated, a PIT entry may timeout at a predetermined interval between the broadcast and/or forwarding and the data coming back.

Expressed as an algorithm, process 400 may be instantiated as follows:

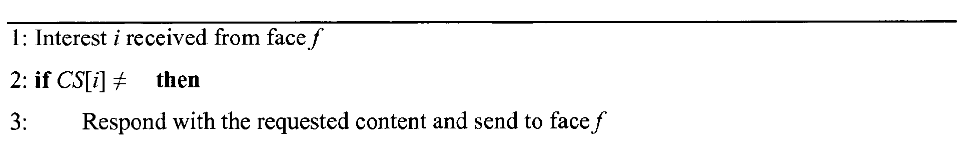

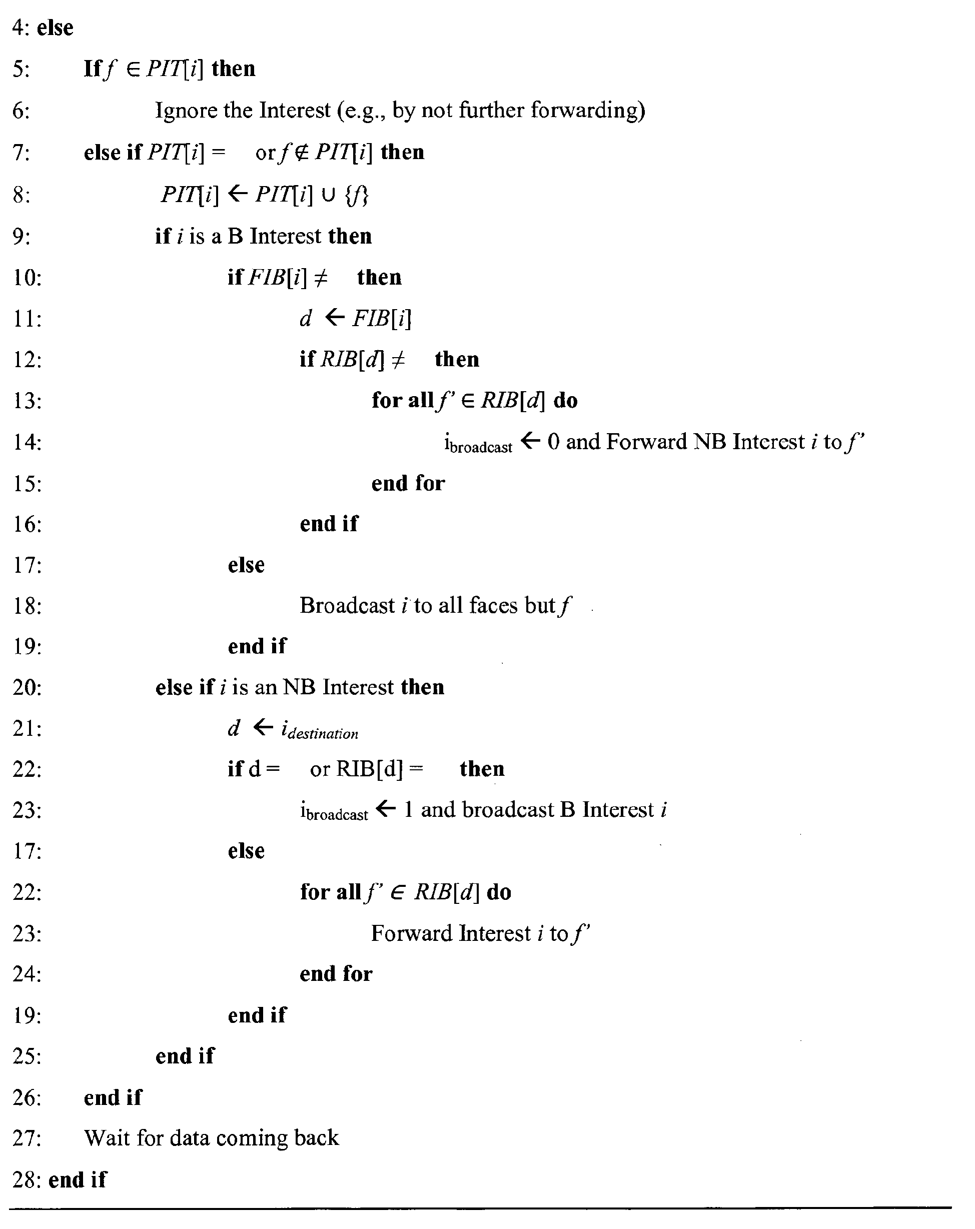

FIG. 5 shows a flowchart 500 for an embodiment of a content router, e.g., the content router of FIG. 4, receiving data coming back. The components of FIG. 5 may be substantially the same as the components of FIG. 4. Process 500 may begin with receiving data, e.g., a data packet 302 of FIG. 3, from a face, e.g., face 211 of FIG. 2. Process 500 may next check the content in the PIT to determine whether a pending interest for the data is contained in the PIT, e.g., in the name element 212 of FIG. 2. If the PIT does not record any interested faces, at block 506 the content router may drop the packet and may end process 500 at block 508. If a PIT entry exists, at block 510 process 500 may determine whether a CS update is needed. If so, at block 512 an entry for the data may be added to the CS, e.g., using the CS name and data elements 212 and 214 of FIG. 2. If the CS does not need to be updated, process 500 may continue and, at block 514, process 500 may determine whether to update the FIB. If so, at block 516 process 500 may add an entry into the FIB, e.g., at name and destination list elements 220 and 222 of FIG. 2. If not, process 500 may continue. Optionally, the content router may update the source field, e.g., source field 320 of FIG. 3, in the packet with its own name. This name may be optionally obfuscated for purposes such as preserving privacy. At block 518, process 500 may forward data packets to all requesting faces stored in the PIT associated with the named data content. At block 520, process 500 may remove the PIT entry as all pending interest requests for the named data content have been satisfied, and process 500 may end at block 508.

Expressed as an algorithm, process 500 may be instantiated as follows:

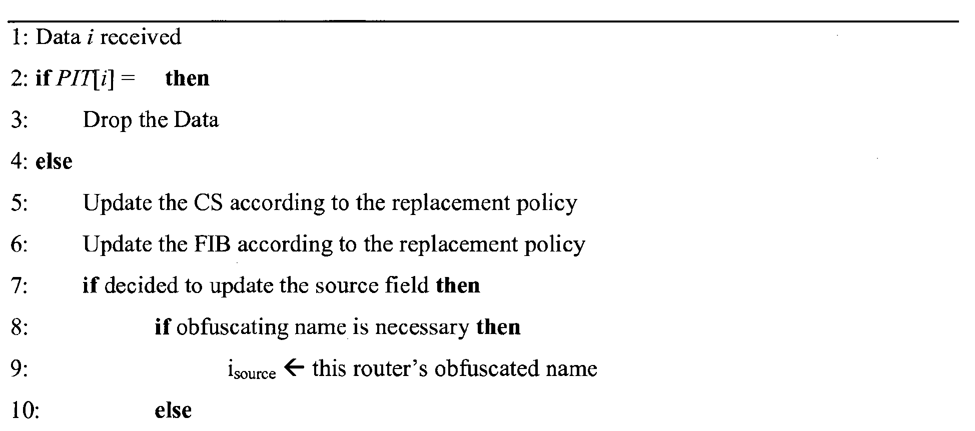

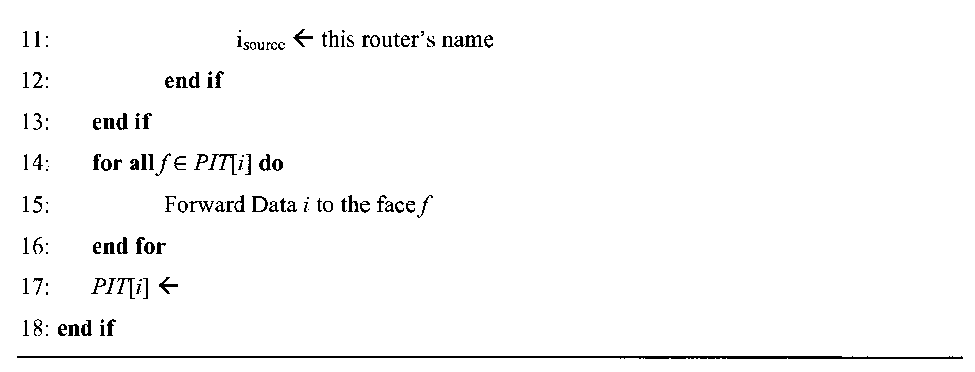

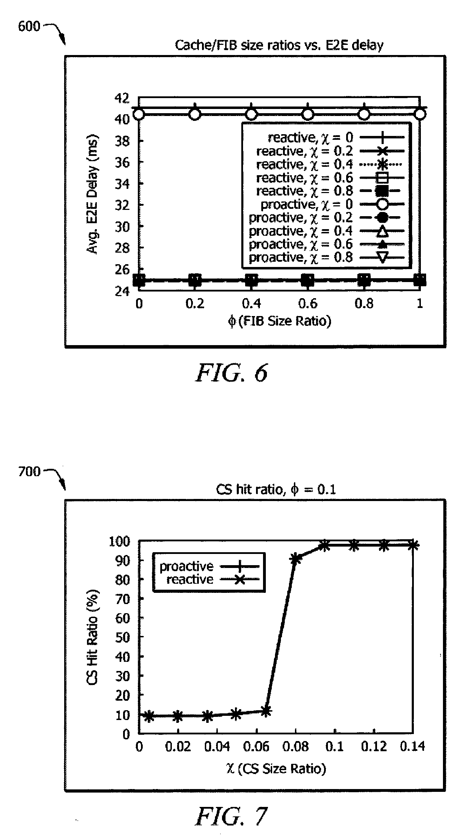

FIGS. 6-11 show the graphic results of evaluating one embodiment of the reactive routing scheme via simulations. The simulations used the Abilene intra-domain network topology. The number of distinct contents used was 150,000 and the total volume of these contents was 150 Terabytes (TB). The arrival rate of interests, e.g., interest packets 300 of FIG. 3, for these contents follows the Poisson distribution. For simplicity, the simulations assumed that the RIB, e.g., RIB 208 of FIG. 2, reflected network connectivity after bootstrap and that the PIT, e.g., PIT 204 of FIG. 2, was sufficiently large to accommodate the topology. The replacement policy for the CS, e.g., CS 202 of FIG. 2, was Least Frequently Used (LFU), and the replacement policy for the FIB was either Least Recently Used (LRU) or LFU, as noted. In the simulated embodiment of the proactive routing scheme, the content origins actively announced their contents every T = 1000 time units. Other embodiments may include different replacement policies, permitting a level of cache-like behavior for routing entries based on certain measured criteria associated with the entry. For example, a large body of state-of-the-art caching algorithms may be adopted by permitting the FIB to only cache next-hop information for popular name prefixes, dynamically evicting "cold" or unpopular entries (e.g., entries with relatively fewer transmitted interest packets associated with the content) to make space for entries associated with "hot" or more popular content. Other measured criteria may include reachability, FIB misses, etc., as would be apparent to those of skill in the art.

Three metrics were used in the evaluations: (1) the average end-to-end (E2E) delay, which reflects the user experienced quality of service, (2) the total number of broadcast packets, which reflects the protocol efficiency and the scalability of the design, and (3) hit ratio of CS and FIB. In each experiment, multiple rounds of simulation were run with 400,000 interest "requests" in each round, with the average performance reported. As used herein, the CS size ratio (χ) is the ratio of the CS size to the total content volume. As used herein, the FIB size ratio (φ) is the ratio of the FIB size to the total number of name prefixes.

FIG. 6 shows the summarized results 600 of average E2E delay against FIB size ratio φ. The FIB size ratio was varied up to 1 to show an evident trend; φ may, in practice, likely be small. As shown in FIG. 6, the proactive and reactive χ = 0 lines returned an average E2E delay in excess of 40 milliseconds (ms), while the remaining simulated cases for varying values of χ returned average E2E delays of about 25 ms.

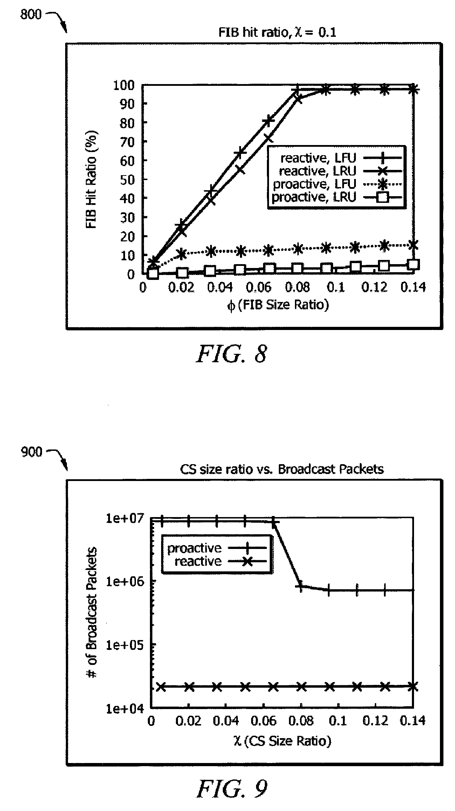

FIG. 7 shows summarized results of CS hit ratios. FIG. 8 shows summarized results of FIB hit ratios. The CS and FIB size ratios in FIGS. 7 and 8 were varied between 0.005 and 0.140. These two size ratios may be small in realistic environments. In FIG. 7, the CS hit ratio for both the proactive and reactive scenarios approach 100% when χ ≥ 0.10, which follows from the content requests following the Zipf distribution such that most contents are "cold". In FIG. 8, the FIB hit ratio for the reactive LFU and LRU scenarios increase linearly when φ ≤ 0.08 and may be approximately 700-900% higher than CS hit ratios for proactive LFU and LRU scenarios when φ ≥ 0.08. The LFU replacement policy may be preferred over LRU for both CS and FIB.

FIG. 9 shows a plot for the number of broadcast packets transmitted when varying the CS size (FIB size ratio φ = 10%) for the evaluated embodiment. In FIG. 9, increasing CS size may reduce the number of broadcast packets in a proactive scenario, since a larger CS may absorb more interest packets. However, the number of broadcast packets for the reactive scenario may be two to three orders of magnitude lower than that by the proactive scheme. In practice, the improvement may be much higher as the number of contents may be much larger.

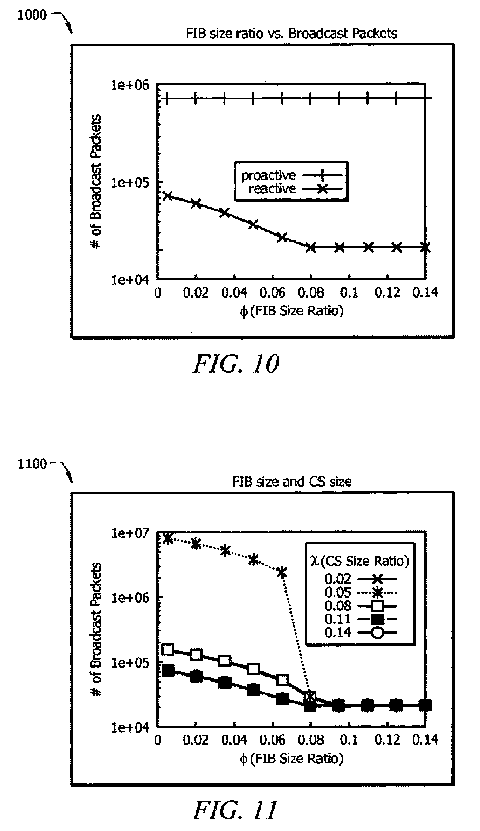

FIG. 10 shows a plot for the results when varying the FIB size (CS size ratio χ = 10%). The proactive scheme shown in FIG. 10 may be less sensitive to FIB size due to the large overhead of the active announcement. In contrast, the reactive scheme may achieve approximately one to two orders of magnitude reduction in broadcast packets, in part due to the treatment of the interest after the FIB hit.

FIG. 11 shows the joint impacts on reduction of broadcast overhead. The curves depicted correspond to the performance of the reactive scheme when the FIB and CS size vary simultaneously. When CS size is small, e.g., approximately χ ≤ 5%, increasing FIB size may improve system efficiency. For example, increasing φ from 0.02 to 0.08 yields almost three orders of magnitude reduction in the number of broadcast packets. The amount of improvement may lessen when CS size is increasing beyond approximately 8%. Where the set of requested content is sufficiently large, CS of any single router may be unlikely to be able to cache 8% or more of all contents. Further, the CS size may impact both the E2E delay and the broadcast overhead; the FIB size may impact only the latter.

The simulation results shown in FIGS. 6-11 may indicate that the E2E delay may be sensitive to the CS size ratio but not FIB size ratio. The E2E delay may not further decrease when the CS size ratio exceeds a certain threshold, e.g., approximately 20% in FIG. 7. In cases described in FIG. 6, the proactive and reactive schemes (1) may result in negligible differences in the average E2E delay, in part due to the fact that whether the destination of the content origin is known, e.g., by the presence of a FIB entry corresponding to a name, or (2) may not reduce the E2E delay, since interest broadcast may also reach the content origin along the shortest path. These results may further suggest that in real-world name-oriented networks, CS size may be more likely to have a greater impact on the E2E delay than FIB size.

As described above, the reactive content-centric routing scheme may address the scalability challenge for intra-domain networks. The evaluations demonstrate that the reactive routing schemes may lead to two to three orders of magnitude fewer broadcast packets than proactive schemes while maintaining approximately the same level of user-perceived E2E latency. The CS size ratio may impact both the E2E delay and the broadcast overhead while FIB size ratio may impact only the latter. However, when the CS only caches a small portion of contents, increasing FIB size may be inevitable and may result two to three order of magnitude reduction on the number of broadcasts. The proposed scheme may also address the interest starvation problem, and may effectively reduce the broadcast interest after the FIB hit.

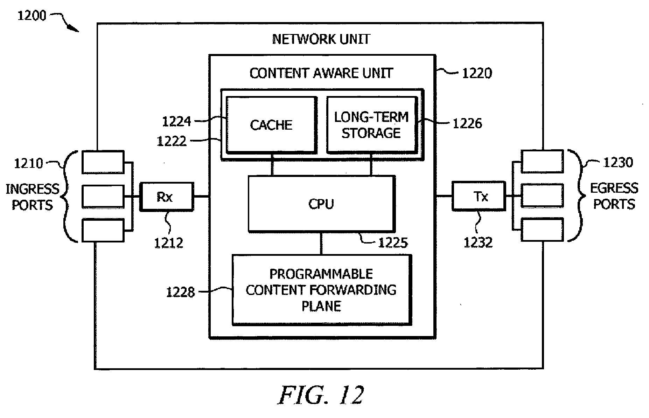

At least some of the features/methods described in the disclosure may be implemented in a network apparatus or component, such as a network node or unit. For instance, the features/methods of the disclosure may be implemented using hardware, firmware, and /or software installed to run on hardware. The network apparatus/component or unit may be any device that transports frames through a network, e.g., a switch, router, bridge, server, etc. FIG. 12 illustrates an embodiment of a network node 1200, which may be any device that transports and processes data through a network. For instance, the network node 1200 may be a content router or any node or router in the CCN/NDN schemes described above. The network node 1200 may be configured to implement or support the adaptive forwarding strategies described above. The network node 1200 may comprise one or more ingress ports or faces 1210 coupled to a receiver (Rx) 1212 for receiving signals and frames/data from other network components. The network node 1200 may comprise a content aware unit 1220 to determine which network components to send content to. The content aware unit 1220 may be implemented using hardware, software, or both. The content aware unit 1220 may comprise a general purpose processor 1225, which may alternately or optionally be an application specific integrated circuit (ASIC), or a digital signal processor (DSP). The network unit 1200 may also comprise one or more egress ports or faces 1230 coupled to a transmitter (Tx) 1232 for transmitting signals and frames/data to the other network components. The receiver 1212, content aware unit 1220, and transmitter 1232 may also be configured to implement at least some of the disclosed methods, which may be based on hardware, software, or both. The components of the network node 1200 may be arranged as shown in FIG. 12.

The content aware unit 1220 may also comprise a programmable content forwarding plane block 1228 and one or more storage blocks 1222 that may be coupled to the programmable content forwarding plane block 1228. The programmable content forwarding plane block 1228 may be configured to implement content forwarding and processing functions, such as at an application layer or layer 3 (L3) in the Open Systems Interconnection (OSI) model, where the content may be forwarded based on content name or prefix and possibly other content related information that maps the content to network traffic. Such mapping information may be maintained in a content table at the content aware unit 1220 or the network unit 1200. The programmable content forwarding plane block 1228 may interpret user requests for content and accordingly fetch content, e.g., based on metadata and/or content name, from the network or other content routers and may store the content, e.g., temporarily, in the storage blocks 1222. The programmable content forwarding plane block 1228 may then forward the cached content to the user. The programmable content forwarding plane block 1228 may be implemented using software, hardware, or both and may operate above the IP layer or layer 2 (L2) in the OSI model. The storage blocks 1222 may comprise a cache 1224 for temporarily storing content, e.g., a Random Access Memory (RAM). Additionally, the storage blocks 1222 may comprise a long-term storage 1226 for storing content relatively longer, e.g., a Read Only Memory (ROM). For instance, the cache 1224 and the long-term storage 1226 may include Dynamic random-access memories (DRAMs), solid-state drives (SSDs), hard disks, or combinations thereof. Notably, the storage blocks 1222 may be used to house the contents of a content router, e.g., content router 200 of FIG. 2, e.g., CS 202, PIT 204, FIB 206, RIB 208, and/or index 210 of FIG. 2.

It is understood that by programming and/or loading executable instructions onto the network node 1200, at least one of the processor 1220, the cache 1224, and the long-term storage 1226 are changed, transforming the network node 1200 in part into a particular machine or apparatus, e.g., a video codec, having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an ASIC, because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R = Rₗ + k * (Rᵤ - Rₗ), wherein k is a variable ranging from 1 percent to 100 percent with a 1 percent increment, i.e., k is 1 percent, 2 percent, 3 percent, 4 percent, 5 percent, ... 50 percent, 51 percent, 52 percent, ..., 95 percent, 96 percent, 97 percent, 98 percent, 99 percent, or 100 percent. Moreover, any numerical range defined by two R numbers as defined in the above is also specifically disclosed. The use of the term about means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method for routing content, wherein the method is performed by a content router (200, 120) in a name-based network, the content router comprising a modified Forwarding Information Base, FIB, which stores a name prefix and a name of a router for the name prefix and a Reachability Information Base, RIB, which stores a forwarding face that the content router uses to reach a router in the name-based network, comprising:
Receiving (400) an interest packet from a first face, wherein the interest packet comprises a content name field populated with a first content name, a destination field, and a broadcast flag field set to broadcast, wherein the broadcast field indicates whether the first face has previously received a request having the first content name; and
Receiving (502) a data packet from a second face, wherein the data packet comprises a content name field populated with a second content name, a source field populated with the identity of a source of data associated with the second content name, and a data field populated with the data associated with the second content name.

2. The method of claim 1, further comprising:
Forwarding the interest packet to a third face, wherein the identity of the third face is selected from a Reachability Information Base RIB entry associated with a destination, and wherein the destination is selected from a destination list in a Forwarding Information Base FIB entry associated with the first content name.

3. The method of claim 1, further comprising:
checking (404) a Content Store, CS, for an entry associated with the first content name;
when the CS entry exists, sending (406) data associated with the CS entry to the first face;
when the CS entry does not exist:
checking (408) a Pending Interest Table, PIT, for an entry associated with the first content name;
when the PIT entry exists, adding (410) the identity of the first face to the PIT entry; and
when the PIT entry does not exist, creating (412) a PIT entry for the first content name.

4. The method of claim 3, further comprising:
checking (414) the FIB for an entry associated with the first content name;
when the FIB entry does not exist, broadcasting (416) the interest to a plurality of faces;
when the FIB entry exists:
retrieving (418) at least one forwarding face associated with the destination listed in the FIB entry; and
forwarding (420) the interest packet to the at least one forwarding face.

5. The method of claim 4, wherein the first content name is the same as the second content name, wherein no CS entry associated with the first content name, further comprising:
creating a CS entry, wherein the CS entry comprises the first content name and the data; and
adding the identity of the source to the destination list in the FIB entry associated with the first content name.

6. The method of claim 4, wherein the FIB entry exists, further comprising updating the FIB entry based on at least one measured criteria associated with the FIB entry.

7. An apparatus (200, 1200) in a name-based network, comprising:
a processor (1225) configured to:
receive an interest packet from a first forwarding face, wherein the interest packet comprises a content name field populated with a content name, a destination field, and a broadcast flag field set to broadcast, wherein the broadcast field indicates whether the first face has previously received a request having the first content name;
add the content name and the identity of the first face to a Pending Interest Table PIT;
obtain a destination associated with the content name from a Forwarding Information Base, FIB, which stores a name prefix and a name of a router for the name prefix;
retrieve the identity of a second face associated with a transmission path to the destination from a Reachability Information Base RIB, which stores a forwarding face that the content router uses to reach a router in the name-based network; and
forward the interest packet to the second face.

8. The apparatus (200, 1200) of claim 7, wherein the interest packet further comprises a broadcast flag.

9. The apparatus (200, 1200) of claim 8, wherein the processor (1225) is further configured to set the broadcast flag to non-broadcast following obtaining the destination from the FIB.

10. The apparatus (200, 1200) of claim 7, wherein the destination comprises a null value, and wherein the second face is selected from a plurality of available network paths.

11. The apparatus (200, 1200) of claim 7, wherein the processor (1225) is further configured to:
receive a data packet from a third face, wherein the data packet comprises a content name field populated with the content name and a data field populated with data;
verify that the content name is associated with an entry in the PIT;
retrieve the identity of at least one requesting face associated with the entry; and
forward the data to the at least one requesting face.

12. The apparatus (200, 1200) of claim 7, wherein the processor (1225) is further configured to apply a replacement policy at the FIB, wherein the replacement policy comprises updating the FIB entry based on at least one measured criteria associated with the FIB entry.

13. A computer program product, which is performed by a content router in a name-based network, comprising computer executable instructions stored on a non-transitory medium that when executed by a processor cause the processor to perform the following:
receive an interest packet from a requesting face, wherein the interest packet comprises a content name field populated with a content name, a destination field, and a broadcast flag field set to broadcast, wherein the broadcast field indicates whether the first face has previously received a request having the first content name;
check a Content Store, CS, for an entry associated with the content name;
when the CS entry exists, send data from the entry to the requesting face;
when the CS entry does not exist, check a Pending Interest Table, PIT, for an existing entry associated with the interest packet;
when the PIT entry exists, drop the interest packet;
when the PIT entry does not exist, create a PIT entry with the content name and the identity of the first face;
check a Forwarding Information Base FIB which stores a name prefix and a name of a router for the name prefix for a FIB entry associated with the content name, wherein the FIB entry comprises a destination;
when the FIB entry exists:
retrieve the destination from the FIB;
retrieve the identity of a second face associated with a transmission path to
the destination from a Reachability Information Base RIB which stores a forwarding face that the content router uses to reach a router in the name-based network; and
forward the interest packet to the second face; and
when the FIB entry does not exist, forward the interest packet to a plurality of neighboring faces.

14. The computer program product of claim 13, wherein when the destination associated with the content name exists in the FIB, the instructions further cause the processor to:
set the broadcast flag to non-broadcast; and
apply a replacement policy on the FIB entry.

15. The computer program product of claim 13, wherein the instructions further cause the processor to perform the following:
receive a data packet from a third face, wherein the data packet comprises a content name field populated with the content name, a source field populated with the identity of a source, and a data field populated with data;
check the Content Store CS for an entry associated with the content name;
when the CS entry exists, drop the data packet; and
when the CS entry does not exist, create a CS entry, wherein the CS entry comprises the content name and the data.

## Patentansprüche

1. Verfahren zum Routing von Inhalt, wobei das Verfahren durch einen Inhaltsrouter (200, 120) in einem namenbasierenden Netz durchgeführt wird, wobei der Inhaltsrouter eine abgeänderte Weiterleitungsinformationsbasis FIB (Forwarding Information Base) umfasst, die einen Namenpräfix und einen Namen eines Routers für den Namenpräfix speichert, und eine Erreichbarkeitsinformationsbasis RIB (Reachability Information Base), die eine Weiterleitungsfläche speichert, die der Inhaltsrouter zum Erreichen eines Routers in dem namenbasierenden Netz benutzt, umfassend:
Empfangen (400) eines Interessenpakets von einer ersten Fläche, wobei das Interessenpaket ein Inhaltsnamenfeld umfasst, belegt mit einem ersten Inhaltsnamen, einem Zielfeld und einem auf Rundsenden gesetzten Rundsendungsmarkierungsfeld, wobei das Rundsendungsfeld anzeigt, ob die erste Fläche vorher eine Anforderung mit dem ersten Inhaltsnamen empfangen hat; und
Empfangen (502) eines Datenpakets von einer zweiten Fläche, wobei das Datenpaket ein Inhaltsnamenfeld belegt mit einem zweiten Inhaltsnamen, ein Ursprungsfeld belegt mit der Identität eines Ursprungs von mit dem zweiten Inhaltsnamen verbundenen Daten und ein Datenfeld belegt mit mit dem zweiten Inhaltsnamen verbundenen Daten umfasst.

2. Verfahren nach Anspruch 1, weiterhin umfassend:
Weiterleiten des Interessenpakets zu einer dritten Fläche, wobei die Identität der dritten Fläche aus einem mit einem Ziel verbundenen Eintrag in der Erreichbarkeitsinformationsbasis RIB ausgewählt wird, und wobei das Ziel aus einer Zielliste in einem mit dem ersten Inhaltsnamen verbundenen Eintrag in der Weiterleitungsinformationsbasis FIB ausgewählt wird.

3. Verfahren nach Anspruch 1, weiterhin umfassend:
Überprüfen (404) eines Inhaltsspeichers CS (Content Store) auf einen mit dem ersten Inhaltsnamen verbundenen Eintrag;
wenn der CS-Eintrag besteht, Senden (406) von mit dem CS-Eintrag verbundenen Daten zur ersten Fläche;
wenn der CS-Eintrag nicht besteht:
Überprüfen (408) einer Tabelle anhängigen Interesses PIT (Pending Interest Table) auf einen mit dem ersten Inhaltsnamen verbundenen Eintrag;
wenn der PIT-Eintrag besteht, Zufügen (410) der Identität der ersten Fläche zu dem PIT-Eintrag; und
wenn der PIT-Eintrag nicht besteht, Erstellen (412) eines PIT-Eintrags für den ersten Inhaltsnamen.

4. Verfahren nach Anspruch 3, weiterhin umfassend:
Überprüfen (414) der FIB auf einen mit dem ersten Inhaltsnamen verbundenen Eintrag;
wenn der FIB-Eintrag nicht besteht, Rundsenden (416) des Interesses zu einer Vielzahl von Flächen;
wenn der FIB-Eintrag besteht:
Abrufen (418) wenigstens einer mit dem im FIB-Eintrag aufgeführten Ziel verbundenen Weiterleitungsfläche; und
Weiterleiten (420) des Interessenpakets zu der wenigstens einen Weiterleitungsfläche.

5. Verfahren nach Anspruch 4, wobei der erste Inhaltsname der gleiche ist wie der zweite Inhaltsname, wobei kein CS-Eintrag mit dem ersten Inhaltsnamen verbunden ist, weiterhin umfassend:
Erstellen eines CS-Eintrags, wobei der CS-Eintrag den ersten Inhaltsnamen und die Daten umfasst; und
Zufügen der Identität des Ursprungs zu der Zielliste in dem mit dem ersten Inhaltsnamen verbundenen FIB-Eintrag.

6. Verfahren nach Anspruch 4, wobei der FIB-Eintrag besteht, weiterhin umfassend Aktualisieren des FIB-Eintrags basierend auf wenigstens einem mit dem FIB-Eintrag verbundenen gemessenen Kriterium.

7. Einrichtung (200, 1200) in einem namenbasierenden Netz, umfassend:
einen Prozessor (1225), eingerichtet zum:
Empfangen eines Interessenpakets von einer ersten Weiterleitungsfläche, wobei das Interessenpaket ein mit einem Inhaltsnamen belegtes Inhaltsnamenfeld umfasst, ein Zielfeld und ein auf Rundsenden gesetzt Rundsendungsmarkierungsfeld, wobei das Rundsendungsfeld anzeigt, ob die erste Fläche vorher eine Anforderung mit dem ersten Inhaltsnamen empfangen hat;
Zufügen des Inhaltsnamens und der Identität der ersten Fläche zu einer Tabelle anhängigen Interesses PIT;
Erhalten eines mit dem Inhaltsnamen verbundenen Ziels aus einer Weiterleitungsinformationsbasis FIB (Forwarding Information Base), die einen Namenpräfix und einen Namen eines Routers für den Namenpräfix speichert;
Abrufen der Identität einer zweiten mit einem Übertragungsweg zum Ziel von einer Erreichbarkeitsinformationsbasis RIB (Reachability Information Base) verbundenen Fläche, welche RIB eine Weiterleitungsfläche speichert, die der Inhaltsrouter zum Erreichen eines Routers in dem namenbasierenden Netz benutzt; und
Weiterleiten des Interessenpakets zur zweiten Fläche.

8. Einrichtung (200, 1200) nach Anspruch 7, wobei das Interessenpaket weiterhin eine Rundsendungsmarkierung umfasst.

9. Einrichtung (200, 1200) nach Anspruch 8, wobei der Prozessor (1225) weiterhin eingerichtet ist zum Setzen der Rundsendungsmarkierung auf Nichtrundsenden nach Erhalten des Ziels von der FIB.

10. Einrichtung (200, 1200) nach Anspruch 7, wobei das Ziel einen Nullwert umfasst und wobei die zweite Fläche aus einer Vielzahl verfügbarer Netzwege ausgewählt wird.

11. Einrichtung (200, 1200) nach Anspruch 7, wobei der Prozessor (1225) weiterhin eingerichtet ist zum:
Empfangen eines Datenpakets von einer dritten Fläche, wobei das Datenpaket ein Inhaltsnamenfeld belegt mit dem Inhaltsnamen und ein datenbelegtes Datenfeld umfasst;
Überprüfen, dass der Inhaltsname mit einem Eintrag in der PIT verbunden ist;
Abrufen der Identität wenigstens einer mit dem Eintrag verbundenen anfordernden Fläche; und
Weiterleiten der Daten zu der wenigstens einen anfordernden Fläche.

12. Einrichtung (200, 1200) nach Anspruch 7, wobei der Prozessor (1225) weiterhin eingerichtet ist zum Anwenden einer Austauschrichtlinie an der FIB, wobei die Austauschrichtlinie Aktualisieren des FIB-Eintrags basierend auf wenigstens einem mit dem FIB-Eintrag verbundenen gemessenen Kriterium umfasst.

13. Computerprogrammprodukt, das durch einen Inhaltsrouter in einem namenbasierenden Netz durchgeführt wird, umfassend auf einem nichtflüchtigen Medium gespeicherte computerausführbare Anweisungen, die bei Ausführung durch einen Prozessor den Prozessor veranlassen, das Folgende durchzuführen:
Empfangen eines Interessenpakets von einer anfordernden Fläche, wobei das Interessenpaket ein Inhaltsnamenfeld umfasst, belegt mit einem Inhaltsnamen, einem Zielfeld und einem auf Rundsenden gesetzten Rundsendungsmarkierungsfeld, wobei das Rundsendungsfeld anzeigt, ob die erste Fläche vorher eine Anforderung mit dem ersten Inhaltsnamen empfangen hat;
Überprüfen eines Inhaltsspeichers CS (Content Store) auf einen mit dem Inhaltsnamen verbundenen Eintrag;
wenn der CS-Eintrag besteht, Senden von Daten von dem Eintrag zu der anfordernden Fläche;
wenn der CS-Eintrag nicht besteht, Uberprüfen einer Tabelle anhängigen Interesses PIT auf einen mit dem Interessenpaket verbundenen bestehenden Eintrag;
wenn der PIT-Eintrag besteht, Abwerfen des Interessenpakets;
wenn der PIT-Eintrag nicht besteht, Erstellen eines PIT-Eintrags mit dem Inhaltsnamen und der Identität der ersten Fläche;
Überprüfen einer Weiterleitungsinformationsbasis FIB (Forwarding Information Base), die einen Namenpräfix und einen Namen eines Routers für den Namenpräfix speichert, auf einen mit dem Inhaltsnamen verbundenen FIB-Eintrag, wobei der FIB-Eintrag ein Ziel umfasst;
wenn der FIB-Eintrag besteht:
Abrufen des Ziels aus der FIB;
Abrufen der Identität einer zweiten mit einem Übertragungsweg zum Ziel von einer Erreichbarkeitsinformationsbasis RIB (Reachability Information Base) verbundenen Fläche, welche RIB eine Weiterleitungsfläche speichert, die der Inhaltsrouter zum Erreichen eines Routers in dem namenbasierenden Netz benutzt; und
Weiterleiten des Interessenpakets zu der zweiten Fläche; und
wenn der FIB-Eintrag nicht besteht, Weiterleiten des Interessenpakets zu einer Vielzahl von Nachbarflächen.

14. Computerprogrammprodukt nach Anspruch 13, wobei, wenn das mit dem Inhaltsnamen verbundene Ziel in der FIB besteht, die Anweisungen weiterhin den Prozessor veranlassen:
die Rundsendungsmarkierung auf Nicht-Rundsenden zu setzen; und
eine Austauschrichtlinie an den FIB-Eintrag anzuwenden.

15. Computerprogrammprodukt nach Anspruch 13, wobei die Anweisungen weiterhin den Prozessor veranlassen, Folgendes durchzuführen:
Empfangen eines Datenpakets von einer dritten Fläche, wobei das Datenpaket ein Inhaltsnamenfeld belegt mit dem Inhaltsnamen, ein Ursprungsfeld belegt mit der Identität eines Ursprungs und ein mit Daten belegtes Datenfeld umfasst;
Überprüfen des Inhaltsspeichers CS (Content Store) auf einen mit den Inhaltsnamen verbundenen Eintrag;
wenn der CS-Eintrag besteht, Abwerfen des Datenpakets; und
wenn der CS-Eintrag nicht besteht, Erstellen eines CS-Eintrags, wobei der CS-Eintrag den Inhaltsnamen und die Daten umfasst.

## Revendications

1. Procédé d'acheminement de contenu, dans lequel le procédé est mis en oeuvre par un routeur de contenu (200, 120) dans un réseau à base de noms, le routeur de contenu comprenant une base d'informations de réacheminement, FIB (Forwarding Information Base), modifiée qui stocke un préfixe de nom et un nom d'un routeur correspondant au préfixe de nom et une base d'informations d'accessibilité, RIB (Reachability Information Base), qui stocke une face de réacheminement que le routeur de contenu utilise pour atteindre un routeur dans le réseau à base de nom, consistant à :
recevoir (400) un paquet d'intérêt en provenance d'une première face, dans lequel le paquet d'intérêt comprend un champ de nom de contenu peuplé avec un premier nom de contenu, un champ de destination et un champ d'indicateur de diffusion réglé pour la diffusion, dans lequel le champ de diffusion indique si la première face a précédemment reçu une demande ayant le premier nom de contenu ; et
recevoir (502) un paquet de données en provenance d'une deuxième face, dans lequel le paquet de données comprend un champ de nom de contenu peuplé avec un deuxième nom de contenu, un champ de source peuplé avec l'identité d'une source de données associées au deuxième nom de contenu, et un champ de données peuplé avec les données associées au deuxième nom de contenu.

2. Procédé selon la revendication 1, consistant en outre à :
réacheminer le paquet d'intérêt vers une troisième face, dans lequel l'identité de la troisième face est sélectionnée dans une entrée de la base d'informations d'accessibilité RIB associée à une destination et dans lequel la destination est sélectionnée dans une liste de destinations contenue dans une entrée de la base d'informations de réacheminement FIB associée au premier nom de contenu.

3. Procédé selon la revendication 1, consistant en outre à :
vérifier (404) une mémoire de contenu, CS (Content Store), en ce qui concerne une entrée associée au premier nom de contenu ;
lorsque l'entrée de CS existe, envoyer (406) les données associées à l'entrée de CS à la première face ;
lorsque l'entrée de CS n'existe pas :
vérifier (408) une table d'intérêt en attente, PIT (Pending Interest Table), en ce qui concerne une entrée associée au premier nom de contenu ;
lorsque l'entrée de PIT existe, ajouter (410) l'identité de la première face à l'entrée de PIT ; et
lorsque l'entrée de PIT n'existe pas, créer (412) une entrée de PIT pour le premier nom de contenu.

4. Procédé selon la revendication 3, consistant en outre à :
vérifier (414) la FIB en ce qui concerne une entrée associée au premier nom de contenu ;
lorsque l'entrée de FIB n'existe pas, diffuser (416) l'intérêt vers une pluralité de faces ;
lorsque l'entrée de FIB existe, extraire (418) au moins une face de réacheminement associée à la destination contenue dans une liste dans l'entrée de FIB ; et
réacheminer (420) le paquet d'intérêt vers ladite au moins une face de réacheminement.

5. Procédé selon la revendication 4, dans lequel le premier nom de contenu est identique au deuxième nom de contenu, dans lequel aucune entrée de CS associée au premier nom de contenu n'existe, consistant en outre à :
créer une entrée de CS, dans lequel l'entrée de CS comprend le premier nom de contenu et les données ; et
ajouter l'identité de la source à la liste de destinations dans l'entrée de FIB associée au premier nom de contenu.

6. Procédé selon la revendication 4, dans lequel l'entrée de FIB existe, consistant en outre à mettre à jour l'entrée de FIB sur la base d'au moins un critère mesuré associé à l'entrée de FIB.

7. Appareil (200, 1200) dans un réseau à base de noms, comprenant :
un processeur (1225) configuré pour :
recevoir un paquet d'intérêt en provenance d'une première face de réacheminement, dans lequel le paquet d'intérêt comprend un champ de nom de contenu peuplé avec un premier nom de contenu, un champ de destination, et un champ d'indicateur de diffusion réglé pour la diffusion, dans lequel le champ de diffusion indique si la première face a précédemment reçu une demande ayant le premier nom de contenu ;
ajouter le nom de contenu et l'identité de la première face à une table d'intérêt en cours PIT ;
obtenir une destination associée au nom de contenu à partir d'une base d'informations de réacheminement, FIB, qui stocke un préfixe de nom et un nom d'un routeur correspondant au préfixe de nom ;
extraire l'identité d'une deuxième face associée à un trajet de transmission vers la destination d'une base d'informations d'accessibilité, RIB, qui stocke une face de réacheminement que le routeur de contenu utilise pour atteindre un routeur dans le réseau à base de noms ; et
réacheminer le paquet d'intérêt vers la deuxième face.

8. Appareil (200, 1200) selon la revendication 7, dans lequel le paquet d'intérêt comprend en outre un indicateur de diffusion.

9. Appareil (200, 1200) selon la revendication 8, dans lequel le processeur (1225) est en outre configuré pour régler l'indicateur de diffusion à l'état de non-diffusion après avoir obtenu la destination à partir de la FIB.

10. Appareil (200, 1200) selon la revendication 7, dans lequel la destination comprend une valeur nulle et dans lequel la deuxième face est sélectionnée parmi une pluralité de trajets de réseau disponibles.

11. Appareil (200, 1200) selon la revendication 7, dans lequel le processeur (1225) est en outre configuré pour :
recevoir un paquet de données en provenance d'une troisième face, dans lequel le paquet de données comprend un champ de nom de contenu peuplé avec le nom de contenu et un champ de données peuplé avec des données ;
vérifier que le nom de contenu est associé à une entrée dans la PIT ;
extraire l'identité d'au moins une face demandeuse associée à l'entrée ; et
réacheminer les données vers ladite au moins une face demandeuse.

12. Appareil (200, 1200) selon la revendication 7, dans lequel le processeur (1225) est en outre configuré pour appliquer une politique de remplacement au niveau de la FIB, dans lequel la politique de remplacement consiste à mettre à jour l'entrée de FIB sur la base d'au moins un critère mesuré associé à l'entrée de FIB.

13. Produit de programme informatique qui est mis en oeuvre par un routeur de contenu dans un réseau à base de noms, comprenant des instructions exécutables sur ordinateur stockées sur un support non volatil qui, lorsqu'elles sont exécutées par un processeur, amènent le processeur à exécuter les étapes consistant à :
recevoir un paquet d'intérêt en provenance d'une première face demandeuse, dans lequel le paquet d'intérêt comprend un champ de nom de contenu peuplé avec un premier nom de contenu, un champ de destination, et un champ d'indicateur de diffusion réglé pour la diffusion, dans lequel le champ de diffusion indique si la première face a antérieurement reçu une demande ayant le premier nom de contenu ;
vérifier une mémoire de contenu, CS, en ce qui concerne une entrée associée au nom de contenu ;
lorsque l'entrée de CS existe, envoyer des données de l'entrée vers la face demandeuse ;
lorsque l'entrée de CS n'existe pas, vérifier une table d'intérêt en cours, PIT, en ce qui concerne une entrée existante associée au paquet d'intérêt ;
lorsque l'entrée de PIT existe, abandonner le paquet d'intérêt ;
lorsque l'entrée de PIT n'existe pas, créer une entrée de PIT avec le nom de contenu et l'identité de la première face ;
vérifier une base d'informations de réacheminement, FIB, qui stocke un préfixe de nom et un nom d'un routeur correspondant au préfixe de nom pour une entrée de FIB associée au nom de contenu, dans lequel l'entrée de FIB comprend une destination ;
lorsque l'entrée de PIT existe :
extraire la destination à partir de la FIB ;
extraire l'identité d'une deuxième face associée à un trajet de transmission vers la destination d'une base d'informations d'accessibilité, RIB, qui stocke une face de réacheminement que le routeur de contenu utilise pour atteindre un routeur dans le réseau à base de noms ; et
réacheminer le paquet d'intérêt vers la deuxième face ; et
lorsque l'entrée de FIB n'existe pas, réacheminer le paquet d'intérêt vers une pluralité de faces voisines.

14. Produit de programme informatique selon la revendication 13, dans lequel, lorsque la destination associée au nom de contenu existe dans la FIB, les instructions amènent en outre le processeur à :
régler l'indicateur de diffusion à l'état de non-diffusion ; et
appliquer une politique de remplacement à l'entrée de FIB.

15. Produit de programme informatique selon la revendication 13, dans lequel les instructions amènent en outre le processeur à exécuter les étapes consistant à :
recevoir un paquet de données en provenance d'une troisième face, dans lequel le paquet de données comprend un champ de nom de contenu peuplé avec le nom de contenu, un champ de source peuplé avec l'identité d'une source, et un champ de données peuplé avec des données ;
vérifier la mémoire de contenu, CS, en ce qui concerne une entrée associée au nom de contenu ;
lorsque l'entrée de CS existe, abandonner le paquet de données ; et
lorsque l'entrée de CS n'existe pas, créer une entrée de CS, dans lequel l'entrée de CS comprend le nom de contenu et les données.
